# EUROPÄISCHE PATENTSCHRIFT

(11) **EP 3 297 812 B1**
(45) Veröffentlichungstag und Bekanntmachung des Hinweises auf die Patenterteilung: **08.11.2023**
(21) Anmeldenummer: 16739021.0
(22) Anmeldetag: 06.07.2016
(51) Int. Cl.: B29C 64/153, B29C 64/214, B29C 64/295, B22F 10/28, B22F 12/67, B33Y 30/00, B33Y 10/00, B22F 12/13, B22F 12/42, B22F 12/49, B22F 12/57

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCÉDÉ ET DISPOSITIF DE FABRICATION D'UN OBJET TRIDIMENSIONNEL

(30) Priorität: 13.07.2015 DE 102015213103
(43) Veröffentlichungstag der Anmeldung: 28.03.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE)
(74) Vertreter: Prüfer & Partner mbB Patentanwälte · Rechtsanwälte
(86) Internationale Anmeldenummer: PCT/EP2016/001153
(87) Internationale Veröffentlichungsnummer: WO 2017/008891

(56) Entgegenhaltungen:
- US-A1- 2007 023 977
- US-A1- 2011 223 349
- US-A1- 2012 094 026
- US-A1- 2015 139 849
- YANG ET AL: "Metering and dispensing of powder; the quest for new solid freeforming techniques", POWDER TECHNOLOGY, ELSEVIER SEQUOIA, LAUSANNE, CH, Bd. 178, Nr. 1, 16. August 2007 (2007-08-16), Seiten 56-72, XP022202413, ISSN: 0032-5910, DOI: 10.1016/J.POWTEC.2007.04.004

## Beschreibung

Die vorliegende Erfindung bezieht sich auf ein Verfahren und eine Vorrichtung zum Herstellen eines dreidimensionalen Objekts durch schichtweises Aufbringen und selektives Verfestigen eines pulverförmigen Aufbaumaterials.

Verfahren und Vorrichtungen dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

EP 1 872 928 A1 beschreibt ein Verfahren, bei dem das Aufbringen der Schichten durch Ausgeben von Partikelmaterial aus einer sich über ein Baufeld bewegenden Dosiervorrichtung erfolgt. Dazu hat die Dosiervorrichtung einen langen nach unten offenen Ausgabespalt, der sich senkrecht zu der Dosiervorrichtung erstreckt. Die Dosiervorrichtung ist während ihrer Bewegung gesteuert ein- und ausschaltbar. Für das Aufbringen einer neuen Schicht wird die Dosiervorrichtung um die gewünschte Schichtdicke weiter angehoben. In einer bevorzugten Ausgestaltung wird die Dosiervorrichtung eingeschaltet, wenn sich ihr Ausgabespalt über dem vorderen Rand der nächstunteren Schicht befindet, und ausgeschaltet, wenn sich ihr Ausgabespalt über dem hinteren Rand der nächstunteren Schicht befindet.

Im Allgemeinen wird jedoch nicht die Beschichtungseinheit zum Aufbringen des Pulvers von Schicht zu Schicht angehoben, sondern ein Träger, auf dem das Objekt gebaut wird, von Schicht zu Schicht abgesenkt. Die maximale Größe des Baufelds, in dem das herzustellende Objekt aufgebaut werden kann, ist dabei durch den durch Höhenverstellung des Trägers absenkbaren Bereich bestimmt.

Eine solche Vorrichtung ist beispielsweise in DE 10 2010 020 418 A1 beschrieben. Zusätzlich ist dort beschrieben, dass die Beschichtung auf einen kleineren Bereich eingeschränkt werden kann als auf das maximale Baufeld. Eine Beschränkung des Beschichtungsbereichs in der Bewegungsrichtung des Beschichters erfolgt dabei durch ein Verkürzen des Verfahrwegs des Beschichters, d.h. dass dieser vor dem Ende des Baufelds seine Bewegungsrichtung umkehrt. Eine Beschränkung senkrecht zu der Bewegungsrichtung erfolgt durch einen mechanischen Einsatz in dem Beschichter.

In der zum Anmeldungszeitpunkt der vorliegenden Anmeldung noch nicht veröffentlichten Deutschen Patentanmeldung 10 2015 207 158 wird ein Verfahren beschrieben, bei dem die Höhe einer aufgebrachten Pulverschicht in der Bewegungsrichtung des Beschichters zumindest abschnittsweise zu- oder abnimmt. Das wird durch Verändern des Höhenabstands zwischen dem Beschichter und einer zuvor aufgebrachten Schicht erreicht, beispielsweise durch Absenken des Beschichters und/oder Anheben und/oder Verkippen des Trägers, auf dem das Objekt aufgebaut wird. In US2011223349 wird ein pulverbettbasiertes additives Fertigungsverfahren offenbart, bei welchem ein Beschichter präzise eine vorbestimmte Menge Pulver abgibt. In US2015139849 wird pulverbettbasiertes additives Fertigungsverfahren offenbart, welches einen Beschichter nutzt um einzelne Schichten mit einer exakt bemessenen Pulvermenge zu beschicken.

Die Aufgabe der vorliegenden Erfindung besteht darin, ein verbessertes Verfahren bzw. eine verbesserte Vorrichtung zum Herstellen eines dreidimensionalen Objekts durch schichtweises Aufbringen und selektives Verfestigen eines pulverförmigen Aufbaumaterials bereitzustellen.

Die Aufgabe wird gelöst durch ein Verfahren gemäß Anspruch 1, ein Computerprogramm gemäß Anspruch 14, eine Steuereinheit gemäß Anspruch 13 oder eine Vorrichtung gemäß Anspruch 11. Weiterbildungen der Erfindung sind jeweils in den Unteransprüchen angegeben. Dabei können das Verfahren und/oder das Computerprogramm auch durch die untenstehenden bzw. in den Unteransprüchen ausgeführten Merkmale der Steuereinheit und/oder der Vorrichtung weitergebildet sein oder umgekehrt.

Das erfindungsgemäße Verfahren zum Herstellen eines dreidimensionalen Objekts auf einem Träger durch schichtweises Aufbringen und selektives Verfestigen eines pulverförmigen Aufbaumaterials enthält die Schritte: Absenken des Trägers auf eine vorbestimmte Höhe unterhalb einer Arbeitsebene, Aufbringen einer Schicht des pulverförmigen Aufbaumaterials in der Arbeitsebene mittels eines über die Arbeitsebene fahrenden Beschichters, selektives Verfestigen der aufgebrachten Pulverschicht an Stellen, die einem Querschnitt des herzustellenden Objekts entsprechen, und Wiederholen der Schritte des Absenkens, des Aufbringens und des selektiven Verfestigens, bis das Objekt fertiggestellt ist. Dabei wird innerhalb eines in der Arbeitsebene liegenden bestimmungsgemäßen Beschichtungsbereichs in einem Bereich, der von dem Beschichter überfahren wird, in Bezug auf mindestens eine Pulverschicht abschnittsweise aktiv gesteuert die Menge des aufgebrachten pulverförmigen Aufbaumaterials verringert (beispielsweise stufig oder stufenlos bzw. stetig oder unstetig verringert) oder gar kein pulverförmiges Aufbaumaterial aufgetragen, wobei eine Dosierung des pulverförmigen Aufbaumaterials über einen Verschluss in dem Beschichter und/oder einer Dosiervorrichtung gesteuert wird. Dadurch kann der Bereich, in dem pulverförmigen Aufbaumaterial aufgetragen wird, eingeschränkt werden, oder es können mehrere voneinander getrennte Bereiche, in denen pulverförmiges Aufbaumaterial aufgetragen wird, gebildet werden. Vorzugsweise enthält der bestimmungsgemäße Beschichtungsbereich ein Baufeld und einen diesen umgebenden Randbereich, wobei das Baufeld der absenkbare Bereich ist, innerhalb dessen die aufgebrachten und selektiv verfestigten Pulverschichten vor dem Aufbringen einer neuen Pulverschicht abgesenkt werden, und das Aufbringen des pulverförmigen Aufbaumaterials in Bezug auf mindestens eine Pulverschicht aktiv gesteuert so erfolgt, dass in dem Randbereich mindestens bereichsweise weniger pulverförmiges Aufbaumaterial aufgebracht wird als im Baufeld oder überhaupt kein pulverförmiges Aufbaumaterial aufgebracht wird, wobei das Aufbringen des pulverförmigen Aufbaumaterials vorzugsweise so gesteuert wird, dass das pulverförmige Aufbaumaterial vollflächig auf das gesamte Baufeld aufgebracht wird. Dadurch kann unter anderem das Aufbringen des Pulvers auf den Bereich eingeschränkt werden, für den es nötig ist, und die Nachteile des Verschleppens von verklumptem Pulvers aus dem Randbereich in den Baubereich können vermieden werden.

Vorzugsweise erfolgt das aktiv gesteuerte Aufbringen des pulverförmigen Aufbaumaterials in Bezug auf eine Mehrzahl, besonders bevorzugt auf die Gesamtzahl der Pulverschichten. Dadurch werden die Vorteile der Erfindung für eine Mehrzahl bzw. die Gesamtzahl der Pulverschichten erzielt.

Vorzugsweise wird das pulverförmige Aufbaumaterial aus einer mit dem Beschichter mitfahrenden Dosiervorrichtung in Richtung des Beschichters dosiert und dann von diesem aufgetragen. Dadurch entfällt beispielweise die Notwendigkeit einer eigenen Dosiervorrichtung im Beschichter selber, und der Pulvervorrat im Beschichter kann in etwa konstant gehalten werden, was die Auftragsbedingungen homogenisiert.

Vorzugsweise wird das pulverförmige Aufbaumaterial vor seinem Aufbringen auf die Arbeitsebene in dem Beschichter und/oder der Dosiervorrichtung fluidisiert und/oder vorgeheizt. Das erleichtert das Aufbringen des Pulvers, verbessert die Schichtqualität bzw. verkürzt die Verarbeitungszeit.

Es wird eine Dosierung des pulverförmigen Aufbaumaterials über einen Verschluss in dem Beschichter und/oder der Dosiervorrichtung gesteuert, wobei der Verschluss vorzugsweise stufenlos geöffnet und/oder geschlossen wird und/oder der Verschluss einen Schieber und/oder eine abgefräste oder geschlitzte Welle umfasst. Somit kann die Menge des aufgebrachten Pulvers durch einfache Mittel dosiert werden.

Vorzugsweise ist um das Baufeld herum in der Arbeitsebene eine Arbeitsplatte angeordnet, die vorzugsweise durch ein eigenes Heizelement beheizt wird, wobei insbesondere die Temperatur der Arbeitsplatte so gesteuert wird, dass sie höher ist als eine Temperatur innerhalb des Baufelds. Als "Temperatur innerhalb des Baufelds" wird insbesondere jene (Durchschnitts-)Temperatur verstanden, die an Stellen des Baufelds vorliegt, an denen nicht durch die Einwirkung des selektiven Verfestigens (etwa eines Verfestigungs-Laserstrahls) gerade eine lokale Temperaturspitze vorliegt.

Alternativ dazu ist vorzugsweise um das Baufeld herum ein Arbeitstisch angeordnet, der zumindest abschnittsweise unter die Arbeitsebene abgesenkt ist und der vorzugsweise durch ein eigenes Heizelement beheizt wird, wobei insbesondere die Temperatur des Arbeitstisches so gesteuert wird, dass sie höher ist als eine Temperatur innerhalb des Baufelds. Auch hier gilt insbesondere die obige Definition der "Temperatur innerhalb des Baufelds". Durch das Heizen der Arbeitsplatte oder des Arbeitstisches können Störungen der Temperaturverteilung auf dem Baufeld durch Konvektionswalzen vermieden und dadurch die Bauteilqualität verbessert werden. Durch das Absenken des Arbeitstisches unter die Arbeitsebene kann beispielsweise verhindert werden, dass eventuell auf diesen gelangtes und durch das Heizen verklumptes Pulver zurück auf das Baufeld verschleppt wird, was ebenfalls die Bauteilqualität verbessern kann.

Vorzugsweise ist in Beschichtungsrichtung hinter dem Baufeld (bevorzugt im Wesentlichen angrenzend an das Baufeld) ein Überlaufschlitz angeordnet, durch den überschüssiges Pulver in einen Überlaufbehälter fallen kann. Dadurch wird zusätzlich verhindert, dass überschüssiges Pulver in den Randbereich des bestimmungsgemäßen Beschichtungsbereichs gelangen kann.

Das erfindungsgemäße Computerprogramm, das in eine programmierbare Steuereinheit ladbar ist, enthält Programmcodemittel, um alle Schritte des erfindungsgemäßen Verfahrens durchzuführen, wenn das Computerprogramm auf der Steuereinheit ausgeführt wird. Dadurch ist es möglich, das erfindungsgemäße Verfahren auf einfache Weise softwaregesteuert durch Ausführen des Computerprogramms in einer Steuereinheit auszuführen.

Die erfindungsgemäße Steuereinheit ist für eine Vorrichtung zum Herstellen eines dreidimensionalen Objekts durch selektives schichtweises Verfestigen von Aufbaumaterial bestimmt, wobei die Vorrichtung umfasst: einen in einer vertikalen Richtung bewegbaren Träger, auf dem das Objekt aufgebaut werden soll, einen über eine Arbeitsebene bewegbaren Beschichter zum Aufbringen einer Schicht des Aufbaumaterials auf die Arbeitsebene und eine Verfestigungsvorrichtung zum selektiven Verfestigen der aufgebrachten Schicht an Stellen, die einem Querschnitt des herzustellenden Objekts entsprechen. Die Steuereinheit ist ausgebildet, die Vorrichtung so zu steuern, dass sie die Schritte des Absenkens, des Aufbringens und des selektiven Verfestigens wiederholt, bis das Objekt fertiggestellt ist, und dass sie das Aufbringen des pulverförmigen Aufbaumaterials so durchführt, dass innerhalb eines in der Arbeitsebene liegenden bestimmungsgemäßen Beschichtungsbereichs in einem Bereich, der von dem Beschichter überfahren wird, in Bezug auf mindestens eine Pulverschicht abschnittsweise aktiv gesteuert die Menge des aufgebrachten pulverförmigen Aufbaumaterials verringert oder gar kein pulverförmiges Aufbaumaterial aufgetragen wird, wobei eine Dosierung des pulverförmigen Aufbaumaterials über einen Verschluss in dem Beschichter und/oder einer Dosiervorrichtung gesteuert wird.

Dadurch ist es möglich, das erfindungsgemäße Verfahren mittels einer Steuereinheit auszuführen.

Die erfindungsgemäße Vorrichtung zum Herstellen eines dreidimensionalen Objekts durch selektives schichtweises Verfestigen von Aufbaumaterial umfasst: einen in einer vertikalen Richtung bewegbaren Träger, auf dem das Objekt aufgebaut werden soll, einen über eine Arbeitsebene bewegbaren Beschichter zum Aufbringen einer Schicht des Aufbaumaterials auf die Arbeitsebene und eine Verfestigungsvorrichtung zum selektiven Verfestigen der aufgebrachten Schicht an Stellen, die einem Querschnitt des herzustellenden Objekts entsprechen. Die Vorrichtung ist ausgebildet und/oder gesteuert, die Schritte des Absenkens, des Aufbringens und des selektiven Verfestigens zu wiederholen, bis das Objekt fertiggestellt ist, und das Aufbringen des pulverförmigen Aufbaumaterials so durchzuführen, dass innerhalb eines in der Arbeitsebene liegenden bestimmungsgemäßen Beschichtungsbereichs in einem Bereich, der von dem Beschichter überfahren wird, in Bezug auf mindestens eine Pulverschicht abschnittsweise aktiv gesteuert die Menge des aufgebrachten pulverförmigen Aufbaumaterials verringert oder gar kein pulverförmiges Aufbaumaterial aufgetragen wird, wobei eine Dosierung des pulverförmigen Aufbaumaterials über einen Verschluss in dem Beschichter und /oder einer Dosiervorrichtung gesteuert wird. Dadurch wird eine Vorrichtung zum Herstellen eines dreidimensionalen Objekts bereitgestellt, mit der es möglich ist, das erfindungsgemäße Verfahren auszuführen.

Vorzugsweise enthält die Vorrichtung weiter einen nach oben offenen Behälter, wobei der Träger in dem Behälter angeordnet ist, die obere Öffnung des Behälters in der Arbeitsebene liegt, das Innere dieser Öffnung ein schrittweise absenkbares Baufeld bildet und die Vorrichtung ausgebildet und/oder gesteuert ist, das Aufbringen des pulverförmigen Aufbaumaterials in Bezug auf mindestens eine Pulverschicht aktiv gesteuert so durchzuführen, dass in einem das Baufeld umgebenden Randbereich des bestimmungsgemäßen Beschichtungsbereichs mindestens bereichsweise weniger pulverförmiges Aufbaumaterial als im Baufeld oder überhaupt kein Aufbaumaterial aufgebracht wird. Dadurch kann unter Anderem das Aufbringen des Pulvers auf den Bereich eingeschränkt werden, für den es nötig ist, und die Nachteile des Verschleppens von verklumptem Pulvers aus dem Randbereich in den Baubereich kann vermieden werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum schichtweisen Herstellen eines dreidimensionalen Objekts, die zum Durchführen eines Verfahrens gemäß einer ersten Ausführungsform der vorliegenden Erfindung geeignet ist.
- Fig. 2: ist eine vergrößerte schematische Schnittansicht eines Ausschnitts, der in Fig. 1 von einer gestrichelten Linie umrahmt ist, während des Aufbringens einer Pulverschicht.
- Fig. 3: ist eine schematische Schnittansicht eines Dosiermoduls, das in einem Verfahren gemäß einer zweiten Ausführungsform der vorliegenden Erfindung verwendet wird.
- Fig. 4: ist eine schematische, teilweise im Schnitt dargestellte Teilansicht einer Vorrichtung zum schichtweisen Herstellen eines dreidimensionalen Objekts gemäß einer dritten Ausführungsform der vorliegenden Erfindung.

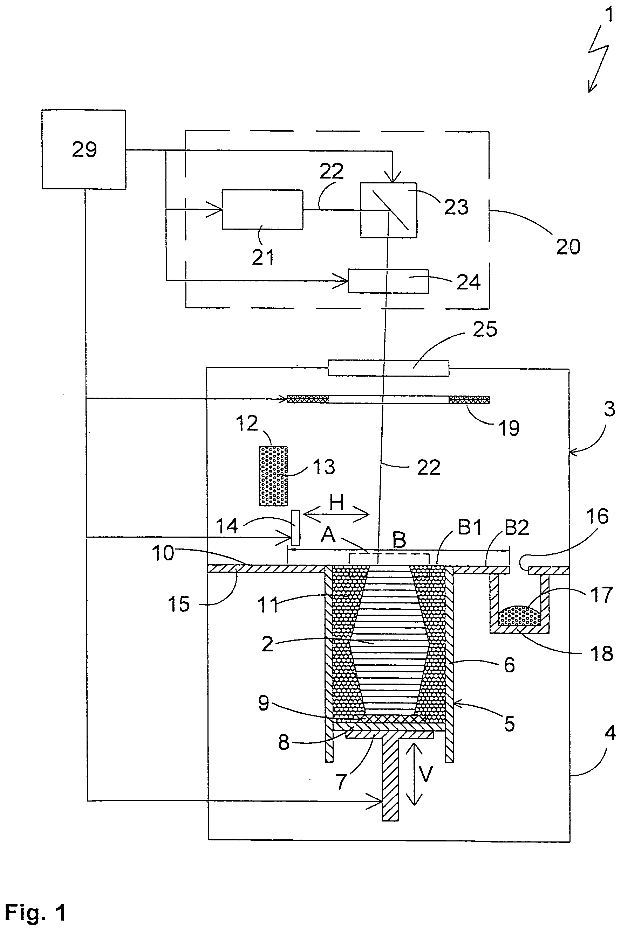

Im Folgenden wird mit Bezug auf Fig. 1 ein Ausführungsbeispiel einer Vorrichtung 1 beschrieben, die zum Durchführen eines Verfahrens gemäß einer ersten Ausführungsform der vorliegenden Erfindung geeignet ist. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer durch den oberen Rand der Wandung 6 definierten Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. Eine Arbeitsplatte 15, die den Behälter 5 allseitig umgibt und vorzugsweise von dem Behälter thermisch isoliert ist, ist so angeordnet, dass ihre obere Oberfläche in der Arbeitsebene 10 liegt. In der Arbeitsplatte 15 ist auf der dem Vorratsbehälter 12 gegenüberliegenden Seite ein Überlaufschlitz 16 angeordnet, durch den überschüssiges Pulver 17 in einen Überlaufbehälter 18 fallen kann. In der Prozesskammer ist ferner eine Strahlungsheizung 19 zum Heizen des auf die Arbeitsebene 10 aufgebrachten Aufbaumaterials 13 angeordnet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das in der Oberseite der Wandung 4 der Prozesskammer 3 angeordnet ist, auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 7 um eine Höhe abgesenkt, die der gewünschten Schichtdicke entspricht. Durch Verfahren des Beschichters 14 über die Arbeitsebene 10 wird dann eine Schicht des pulverförmigen Aufbaumaterials 13 aufgebracht. Dabei ist ein bestimmungsgemäßer Beschichtungsbereich B als der Bereich der Arbeitsebene 10 definiert, innerhalb dessen der Beschichter 14 bei bestimmungsgemäßer Benutzung in der Lage ist, Pulver aufzutragen, in dem also seine Beschichtungsfunktion möglich ist. Bei der in Fig. 1 dargestellten Lasersintervorrichtung 1 erstreckt sich der bestimmungsgemäße Beschichtungsbereich B von der Stelle, an der der Beschichter 14 pulverförmiges Aufbaumaterial von dem Vorratsbehälter 12 aufnimmt, bis zu dem Überlaufschlitz 16, durch den das dort noch in dem Beschichter 14 verbliebene überschüssige Pulver 17 in den Überlaufbehälter 18 fällt. Dahinter ist keine Beschichtungsfunktion mehr möglich.

Der bestimmungsgemäße Beschichtungsbereich B umfasst das Baufeld B1, also den Bereich der Arbeitsebene 10, der innerhalb der oberen Öffnung des Behälters 5 liegt, und einen das Baufeld B1 umgebenden Randbereich B2. Dabei ist das Baufeld B1 der Bereich, in dem das Objekt 2 aufgebaut werden kann und in dem die aufgebrachten und selektiv verfestigten Pulverschichten vor dem Aufbringen einer neuen Pulverschicht abgesenkt werden.

Die aufgebrachte Pulverschicht wird durch die Strahlungsheizung 19, die dazu ausgelegt ist, das gesamte Baufeld B1 zu beheizen, vorgeheizt. Auch ein Teil der Arbeitsplatte 15 wird von der Strahlungsheizung 19 beheizt. Zusätzlich kann die Arbeitsplatte 15 aber auch durch ein eigens an ihr angebrachtes (in der Figur nicht gezeigtes) Heizelement beheizt werden.

Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

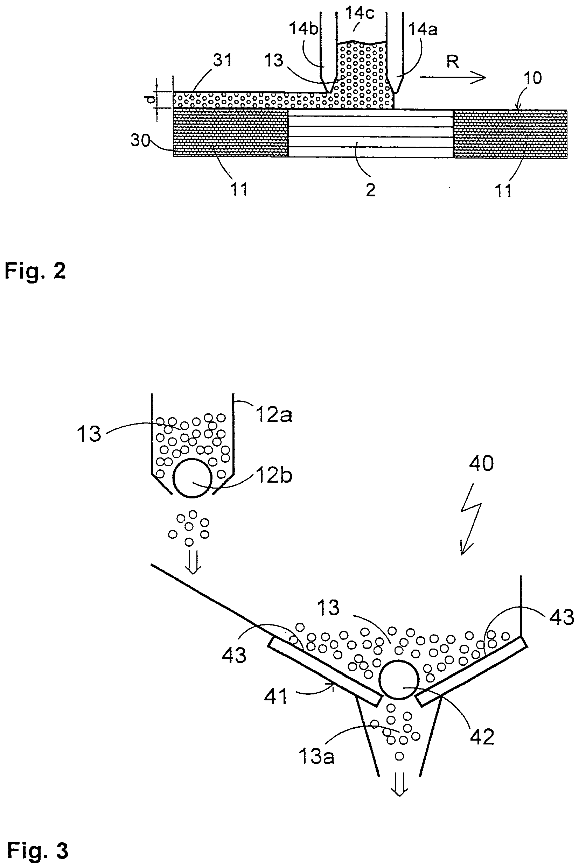

Fig. 2 zeigt schematisch vergrößert einen Ausschnitt A, der in Fig. 1 von einer gestrichelten Linie umrahmt ist.

Nach dem Aufbringen und Verfestigen einer Pulverschicht 30 ist der darin liegende verfestigte Teil des herzustellenden Objekts 2 von unverfestigt gebliebenem Pulver 11 umgeben. Auf diese zuvor aufgebrachten und selektiv verfestigten Pulverschicht 30 wird dann mittels einer Bewegung des Beschichters 14 in einer Beschichtungsrichtung R. eine weitere Pulverschicht 31 des Aufbaumaterials 13 aufgetragen.

Wie in Fig. 2 gezeigt enthält der Beschichter 14 eine Beschichtungseinheit mit einer in der Beschichtungsrichtung R vorne liegenden Klinge (vordere Klinge 14a) und einer in der Beschichtungsrichtung B hinten liegenden Klinge (hintere Klinge 14b). Diese beiden Klingen schließen einen Zwischenraum 14c in der Beschichtungsrichtung B und in die Gegenrichtung zur Beschichtungsrichtung zumindest teilweise ab. Dieser durch die beiden Klingen 14a, 14b begrenzte Zwischenraum 14c ist dazu ausgebildet, einen Vorrat an pulverförmigem Aufbaumaterial 13 aufzunehmen. Senkrecht zur Zeichnungsebene erstrecken sich die beiden Klingen 14a, 14b und damit auch der von ihnen begrenzte Zwischenraum 14c über die gesamte Breite des zu beschichtenden Bereichs.

Beim Verfahren des Beschichters 14 in der Beschichtungsrichtung B verbleibt ein Teil dieses pulverförmigen Aufbaumaterials 13 auf der vorigen Schicht 30 und wird von der hinteren Klinge 14b zu einer gleichmäßigen dünnen Pulverschicht (31) mit der Dicke d ausgezogen. Die aufgebrachte Pulvermenge wird bestimmt durch den Höhenabstand zwischen der Unterkante der hinteren Klinge 14b und der zuvor aufgebrachten Schicht 30.

Zum Aufbringen der neuen Pulverschicht 31 fährt die Beschichtungseinheit 14a-c des Beschichters 14 zunächst zu dem Vorratsbehälter 12 und nimmt dort eine vorbestimmte Menge des pulverförmigen Aufbaumaterials 13 auf. Diese vorbestimmte Pulvermenge ist vorzugsweise größer als die Pulvermenge, die zum Auftragen einer Schicht des pulverförmigen Aufbaumaterials 13 benötigt wird. Dann fährt die Beschichtungseinheit 14a-c über die Arbeitsebene 10 und trägt die neue Pulverschicht 31 auf. Wenn die Beschichtungseinheit 14a-c den Überlaufschlitz 16 erreicht, fällt das dort noch in dem Beschichter 14 verbliebene überschüssige Pulver 17 in den Überlaufbehälter 18.

Gemäß der vorliegenden Ausführungsform erfolgt das Aufbringen der neuen Pulverschicht 31 so, dass in dem vorbestimmten Beschichtungsbereich in einem Bereich, der tatsächlich von dem Beschichter 14 überfahren wird, mindestens bereichsweise aktiv die Menge des aufgebrachten pulverförmigen Aufbaumaterials 13 gesteuert verringert oder gar kein pulverförmiges Aufbaumaterial 13 aufgetragen wird.

Unter aktiv gesteuert ist in diesem Zusammenhang zu verstehen, dass die Menge des aufgebrachten pulverförmigen Aufbaumaterials nicht durch den Höhenabstand zwischen der Unterkante der hinteren Klinge 14b und der zuvor aufgebrachten Schicht 30 bestimmt ist, sondern selektiv und ortsabhängig gegenüber der durch diesen Höhenabstand möglichen Menge aktiv verringert wird. Diese aktiv gesteuerte Verringerung der Pulvermenge erfolgt zumindest für eine Pulverschicht, bevorzugt für eine Mehrzahl von Pulverschichten, in weiter bevorzugter Weise für alle Pulverschichten.

Eine solche aktive Steuerung erfolgt beispielsweise dadurch, dass die Menge des von dem Beschichter 14 abgegebenen pulverförmigen Aufbaumaterials 14 gezielt durch eine an dem Beschichter angebrachte Einrichtung gesteuert wird. Diese Einrichtung kann beispielsweise ein Verschluss und/oder eine Dosiervorrichtung sein, die an dem Beschichter angebracht ist. Der Verschluss kann vorzugsweise stufenlos geöffnet und/oder geschlossen werden. Er kann beispielsweise durch einen Schieber gebildet sein oder durch eine abgefräste oder geschlitzte Welle, die durch eine Drehbewegung über eine Dichtfläche mit Spalt die Pulverabgabe freigibt oder sperrt.

Dadurch kann die aufgebrachte Pulvermenge sowohl in der Bewegungsrichtung des Beschichters als auch in der Querrichtung des Beschichters lokal differenziert gesteuert werden. Anders als im eingangs geschilderten Stand der Technik ist es dadurch beispielsweise möglich, mehr als einen reduzierten Baubereich innerhalb des maximal möglichen Baufelds zu bilden. Das Aufbringen des pulverförmigen Aufbaumaterials kann aber auch so erfolgen, dass das gesamte Baufeld B1 beschichtet wird, wobei das pulverförmige Aufbaumaterial vorzugsweise vollflächig auf das gesamte Baufeld aufgebracht wird, und dass in dem Randbereich B2 des vorbestimmten Beschichtungsbereichs mindestens bereichsweise weniger pulverförmiges Aufbaumaterial als im Baufeld oder im Wesentlichen gar kein pulverförmiges Aufbaumaterial aufgebracht wird.

Die letzte Alternative ist besonders vorteilhaft, wenn ein Beheizen der Arbeitsplatte 15 durch ein eigens daran angebrachtes Heizelement erfolgt. Das wird beispielsweise durchgeführt, um unerwünschte Konvektionen in der Prozesskammer aufgrund eines horizontalen Temperaturgefälles zwischen dem von der Strahlungsheizung 19 erwärmten Pulverschicht im Baufeld B1 und der thermisch trägeren und besser wärmeableitenden Arbeitsplatte 15 zu verringern.

Wird die Temperatur der Arbeitsplatte 15 jedoch zu groß, könnte auf ihr aufgebrachtes pulverförmiges Aufbaumaterial 13 verklumpen und bei der Rückwärtsbewegung des Beschichters 14 auf das Baufeld 15 gezogen werden, wodurch die Qualität der hergestellten Objekts ebenfalls beeinträchtigt werden kann.

Vor diesem Hintergrund ist es bevorzugt, dass die Temperatur der Arbeitsplatte unter Berücksichtigung eines Schwellenwerts des verwendeten pulverförmigen Aufbaumaterials optimiert wird, an welchem Schwellenwert das pulverförmige Aufbaumaterial zum Verklumpen neigt.

Das Verklumpungsrisiko wird außerdem verringert oder sogar vermieden, wenn in dem Randbereich weniger oder gar kein pulverförmiges Aufbaumaterial aufgebracht wird. Andererseits kann dadurch aber auch die Temperatur der Arbeitsplatte 15 erhöht werden, was zu einer besseren Temperaturverteilung im Baufeld führt. Beide Effekte tragen zu einer Verbesserung und Homogenisierung der Bauteilqualität bei.

Zum Vermeiden von Konvektionswalzen wäre theoretisch das Aufheizen der Arbeitsplatte 15 auf die Temperatur des Baufelds ausreichend. Aufgrund thermischer Verluste wie Wärmeleitung, oder Abstrahlung in kältere Bereiche ist es aber bevorzugt, die Temperatur der Arbeitsplatte 15 über die Temperatur des Baufelds hinaus zu erhöhen.

Während das aktiv gesteuerte Dosieren der Pulvermenge gemäß der ersten Ausführungsform in dem Beschichter selber erfolgt, wird es gemäß einer zweiten Ausführungsform alternativ oder zusätzlich dazu in einem eigenen Dosiermodul durchgeführt. Fig. 3 ist eine vergrößerte schematische Schnittansicht eines in der zweiten Ausführungsform verwendeten Dosiermoduls. Im Folgenden werden nur die Unterschiede zur ersten Ausführungsform beschrieben, nicht beschriebene Merkmale der Vorrichtung und des Verfahrens sind wie in der ersten Ausführungsform.

Das Dosiermodul 40 enthält einen in der vorliegenden Ausführungform im Querschnitt trichterförmigen Behälter 41, der zur Aufnahme einer vorbestimmten Menge pulverförmigen Aufbaumaterials 13 geeignet ist, und eine Dosiervorrichtung 42, mittels derer pulverförmiges Aufbaumaterial dosiert an den (in der Figur nicht dargestellten) verfahrbaren Beschichter 14 abgegeben werden kann.

Im Betrieb nimmt das Dosiermodul 40 von einem Pulverauslass 12a des Vorratsbehälters 12 über dessen Dosiervorrichtung 12b eine vorbestimmte Menge von pulverförmigem Aufbaumaterial 13 in den Behälter 41 auf. Diese vorbestimmte Pulvermenge ist vorzugsweise größer als die Pulvermenge, die zum Auftragen einer Schicht des pulverförmigen Aufbaumaterials 13 benötigt wird.

Vorzugsweise wird das in den Behälter 41 aufgenommene Pulver 13 mittels einer (nicht gezeigten) lokalen Strahlungsheizung vorgeheizt und/oder durch Einleiten eines vorzugsweise beheizten Gases fluidisiert, d.h. es wird in dem eine Behälter 41 eine Wirbelschicht des Pulvers 13 erzeugt. Das Dosiermodul fährt gemeinsam mit dem Beschichter 14 über die Arbeitsebene und gibt dabei Pulver 13 mittels der Dosiervorrichtung 42 an die in der ersten Ausführungsform beschriebene Beschichtungseinheit 14a-c ab, die die Pulverschicht 31 aufträgt. Diese Pulverabgabe kann kontinuierlich oder in Intervallen erfolgen.

Gemäß der vorliegenden Ausführungsform erfolgt das Dosieren des pulverförmigen Aufbaumaterial 13 aus dem Dosiermodul 40 in den Beschichter 14 so, dass in dem vorbestimmten Beschichtungsbereich B in einem Bereich, der tatsächlich von dem Beschichter 14 überfahren wird, mindestens bereichsweise aktiv die Menge des aufgebrachten pulverförmigen Aufbaumaterials 13 aktiv gesteuert verringert oder gar kein pulverförmiges Aufbaumaterial 13 aufgetragen wird.

Somit können mit dieser Ausführungsform dieselben Wirkungen erzielt werden wie mit der ersten Ausführungsform. Außerdem kann durch das gezielte Nachdosieren von Pulver aus dem Dosiermodul 40 der Pulverstand in dem Beschichter 14 in dem Bereich, in dem der volle Pulverauftrag erfolgt, konstant gehalten werden, so dass konstante Auftragsbedingungen erreicht werden, was die Objektqualität weiter erhöht. Rechtzeitig vor dem Erreichen der Bereiche, in denen weniger oder gar kein Pulver aufgetragen werden soll, wird dann die Dosierung gedrosselt oder ganz gesperrt.

Die Form des Behälters des Dosiermoduls ist nicht auf die oben beschriebene Trichterform eingeschränkt, sondern kann eine beliebige Form sein, die zur Aufnahme und zum Dosieren einer begrenzten Pulvermenge geeignet ist.

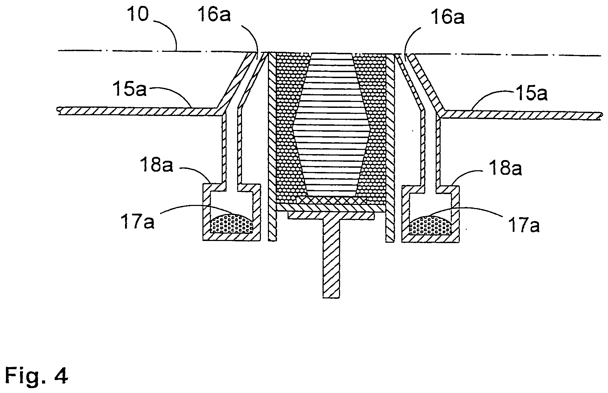

Fig. 4 zeigt eine Teilansicht der in Fig. 1 gezeigten Vorrichtung mit einer Abwandlung, die einer dritten Ausführungsform der vorliegenden Erfindung entspricht. Im Folgenden werden nur die Unterschiede zur ersten bzw. zweiten Ausführungsform beschrieben, nicht beschriebene Merkmale der Vorrichtung und des Verfahrens sind wie in der ersten oder zweiten Ausführungsform.

Die Vorrichtung gemäß der vorliegenden Ausführungsform unterscheidet sich von der in Fig. 1 gezeigten Vorrichtung darin, dass anstelle der mit ihrer oberen Oberfläche in der Arbeitsebene 10 liegenden Arbeitsplatte 15 ein Arbeitstisch 15a angeordnet ist, der gegenüber der Arbeitsebene 10 zumindest abschnittsweise abgesenkt ist. Ähnlich wie die Arbeitsplatte 15 kann der Arbeitstisch 15a durch ein eigens an ihm angebrachtes (in der Figur nicht gezeigtes) Heizelement beheizt werden. Auch hierbei kann die die Temperatur des Arbeitstischs 15a so gesteuert werden, dass sie höher ist als eine Temperatur innerhalb des Baufelds B1.

Weiter sind in dieser Ausführungsform je ein Überlaufschlitz 16a und je ein Überlaufbehälter 18a rechts und links des Baufelds B1 angeordnet. Die in Fig. 2 gezeigte Beschichtungseinheit 14a-c ist aufgrund ihres symmetrischen Aufbaus dazu geeignet, eine Beschichtung auch in einer der ursprünglichen Beschichtungsrichtung R entgegengesetzten Richtung durchzuführen. Dazu ist auch auf der rechten Seite ein (in der Figur nicht gezeigter) Vorratsbehälter angeordnet, der dem in Fig. 1 auf der linken Seite dargestellten Vorratsbehälter entspricht. Das in dem Zwischenraum 14c befindliche Pulver wird dann bei der Fahrt des Beschichters 14 von rechts nach links von der Klinge 14a zu einer gleichmäßigen dünnen Pulverschicht ausgezogen. Überschüssiges Pulver fällt am Ende der Beschichtung durch den linken Überlaufschlitz in den linken Überlaufbehälter, während es nach einer Beschichterfahrt von links nach rechts durch den rechten Überlaufschlitz in den rechten Überlaufbehälter fällt.

Vorzugsweise sind die beiden Überlaufschlitze, wie in Fig. 4 gezeigt, direkt angrenzend an den Behälter 5, also direkt neben dem Baufeld B1 angeordnet, ohne dass zwischen dem Baufeld B1 und dem Überlaufschlitz 16a noch ein Abschnitt des Arbeitstischs 15a liegt. Durch das aktive gesteuerte Dosieren der aufgebrachten Pulvermenge kann erreicht werden, dass nur ein geringer Anteil Pulver, der beispielsweise vom Rand der aufgebrachten Pulverschicht abrutscht, in den Überlaufschlitz gelangt. Im Idealfall ist die Dosierung so genau, dass die überschüssige Menge gegen Null geht.

Das Anordnen des Überlaufschlitzes direkt neben (also in der jeweiligen Beschichtungsrichtung direkt hinter) dem Baufeld bewirkt im Zusammenhang mit der aktiv gesteuerten Dosierung, dass kaum (im Idealfall kein) Pulver auf den eventuell beheizten Arbeitstisch gelangt, während das Absenken des Arbeitstisches unter die Arbeitsebene bewirkt, dass kein eventuell auf den beheizten Arbeitstisch gelangtes (und dort eventuell verklumptes) Pulver zurück auf das Baufeld geschoben wird. Dadurch können die Wirkungen der ersten und zweiten Ausführungsform noch verbessert werden.

Die Merkmale der oben beschriebenen Ausführungsformen können, soweit möglich, einzeln oder gruppenweise auch miteinander kombiniert werden. So können beispielsweise das Hin- und Herfahren des Beschichters und/oder die Anordnung der Überlaufschlitze auf beiden Seiten des Behälters und/oder direkt neben dem Behälter, wie sie für die dritte Ausführungsform beschrieben ist, auch in der ersten oder zweiten Ausführungsform verwirklicht sein, das Fluidisieren und/oder Vorheizen des Pulvers, das gemäß der zweiten Ausführungsform im Dosiermodul 40 erfolgt, kann auch in der ersten Ausführungsform im Beschichter 14 erfolgen, usw.

Bei dem in Fig. 2 gezeigten Beschichtungsmodul 14a-c können die vordere Klinge 14a und die hintere Klinge 14b auch jeweils durch zwei nebeneinanderliegende Klingen gebildet sein. Dabei dient die jeweils in Beschichtungsrichtung vorlaufende (also in dem symmetrischen Modul innen liegende) Klinge als Beschichterklinge, die das pulverförmige Aufbaumaterial zu einer dünnen Schicht auszieht, während die jeweils in Beschichtungsrichtung nachlaufende (also in dem symmetrischen Modul außen liegende) Klinge als Verdichterklinge dient, die das aufgetragene Pulver weiter verdichtet.

Wo möglich, kann auch nur die vordere oder hintere Klinge 14a, 14b, vorgesehen sein. Dabei wird beispielsweise von dem in Fig. 3 gezeigten Dosiermodul 40 eine bestimmte Menge Pulver in Beschichtungsrichtung vor der Klinge aufgebracht und von dieser vorangeschoben und zu einer Pulverschicht 31 ausgezogen.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials angewendet werden.

Der Laser kann beispielsweise einen Gas- oder Festkörperlaser, eine Laserdiode oder jede andere Art von Laser umfassen. Allgemein kann jede Einrichtung verwendet werden, mit der Energie selektiv auf eine Schicht des Aufbaumaterials aufgebracht werden kann. Anstelle eines Lasers können beispielsweise eine Mehrzahl von Lasern, eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgebrachten Aufbaumaterials auch durch 3D-Drucken erfolgen, beispielsweise durch Aufbringen eines Klebers. Allgemein bezieht sich die Erfindung auf das Herstellen eines Objekts mittels schichtweisen Aufbringens und selektiven Verfestigens eines pulverförmigen Aufbaumaterials unabhängig von der Art und Weise, in der das Aufbaumaterial verfestigt wird.

Als Aufbaumaterial können verschiedene Arten von Pulver verwendet werden, insbesondere Metallpulver, Kunststoffpulver, Keramikpulver, Sand, gefüllte oder gemischte Pulver.

## Patentansprüche

1. Verfahren zum Herstellen eines dreidimensionalen Objekts (2) auf einem Träger (7, 8, 9) durch schichtweises Aufbringen und selektives Verfestigen eines pulverförmigen Aufbaumaterials (13) mit den Schritten:
Absenken des Trägers (7, 8, 9) auf eine vorbestimmte Höhe unterhalb einer Arbeitsebene (10),
Aufbringen einer Schicht (31) des pulverförmigen Aufbaumaterials (13) in der Arbeitsebene (10) mittels eines über die Arbeitsebene (10) fahrenden Beschichters (14),
selektives Verfestigen der aufgebrachten Pulverschicht (31) an Stellen, die einem Querschnitt des herzustellenden Objekts (2) entsprechen, und
Wiederholen der Schritte des Absenkens, des Aufbringens und des selektiven Verfestigens, bis das Objekt (2) fertiggestellt ist,
**dadurch gekennzeichnet, dass** innerhalb eines in der Arbeitsebene (10) liegenden bestimmungsgemäßen Beschichtungsbereichs (B) in einem Bereich, der von dem Beschichter (14) überfahren wird, in Bezug auf mindestens eine Pulverschicht abschnittsweise aktiv gesteuert die Menge des aufgebrachten pulverförmigen Aufbaumaterials (13) verringert oder im Wesentlichen gar kein pulverförmiges Aufbaumaterial (13) aufgetragen wird,
wobei eine Dosierung des pulverförmigen Aufbaumaterials (13) über einen Verschluss in dem Beschichter (14) und/oder einer Dosiervorrichtung (40) gesteuert wird.

2. Verfahren gemäß Anspruch 1, bei dem
der bestimmungsgemäße Beschichtungsbereich (B) ein Baufeld (B1) und einen diesen umgebenden Randbereich (B2) enthält,
das Baufeld (B1) der absenkbare Bereich ist, innerhalb dessen die aufgebrachten und selektiv verfestigten Pulverschichten (30) vor dem Aufbringen einer neuen Pulverschicht (31) abgesenkt werden, und
das Aufbringen des pulverförmigen Aufbaumaterials (13) in Bezug auf mindestens eine Pulverschicht aktiv gesteuert so erfolgt, dass in dem Randbereich (B2), insbesondere in Beschichtungsrichtung (R) vor und/oder hinter dem Baufeld (B1), mindestens bereichsweise weniger pulverförmiges Aufbaumaterial (13) aufgebracht wird als im Baufeld (B1) oder im Wesentlichen überhaupt kein pulverförmiges Aufbaumaterial (13) aufgebracht wird.

3. Verfahren gemäß Anspruch 2, bei dem das Aufbringen des pulverförmigen Aufbaumaterials (13) so gesteuert wird, dass das pulverförmige Aufbaumaterial vollflächig auf das gesamte Baufeld (B1) aufgebracht wird.

4. Verfahren gemäß einem der Ansprüche 1 bis 3, wobei das aktiv gesteuerte Aufbringen des pulverförmigen Aufbaumaterials (13) in Bezug auf eine Mehrzahl, besonders bevorzugt auf die Gesamtzahl der Pulverschichten erfolgt.

5. Verfahren gemäß einem der Ansprüche 1 bis 4, bei dem das pulverförmige Aufbaumaterial (13) aus einer mit dem Beschichter (14) mitfahrenden Dosiervorrichtung (40) in Richtung des Beschichters (14) dosiert und dann von diesem aufgetragen wird.

6. Verfahren gemäß einem der Ansprüche 1 bis 5, bei dem das pulverförmige Aufbaumaterial (13) vor seinem Aufbringen auf die Arbeitsebene (10) in dem Beschichter (14) und/oder der Dosiervorrichtung (40) fluidisiert und/oder vorgeheizt wird.

7. Verfahren gemäß einem der Ansprüche 1 bis 6, bei dem
der Verschluss stufenlos geöffnet und/oder geschlossen wird und/oder der Verschluss einen Schieber und/oder eine abgefräste oder geschlitzte Welle umfasst.

8. Verfahren gemäß einem der Ansprüche 1 bis 7, bei dem um das Baufeld (B1) herum in der Arbeitsebene (10) eine Arbeitsplatte (15) angeordnet ist, die vorzugsweise durch ein eigenes Heizelement beheizt wird, wobei insbesondere die Temperatur der Arbeitsplatte (15) so gesteuert wird, dass sie höher ist als eine Temperatur innerhalb des Baufelds (B1).

9. Verfahren gemäß einem der Ansprüche 1 bis 7, bei dem um das Baufeld (B1) herum ein Arbeitstisch (15a) angeordnet ist, der zumindest abschnittsweise unter die Arbeitsebene (10) abgesenkt ist und der vorzugsweise durch ein eigenes Heizelement beheizt wird, wobei insbesondere die Temperatur des Arbeitstisches (15a) so gesteuert wird, dass sie höher ist als eine Temperatur innerhalb des Baufelds (B1).

10. Verfahren gemäß einem der Ansprüche 1 bis 9, bei dem in Beschichtungsrichtung (R) hinter dem Baufeld (B1) ein Überlaufschlitz (16a) angeordnet ist, durch den überschüssiges Pulver (17a) in einen Überlaufbehälter (18a) fallen kann.

11. Vorrichtung (1) zum Herstellen eines dreidimensionalen Objekts (2) durch selektives schichtweises Verfestigen von Aufbaumaterial (13), umfassend:
einen in einer vertikalen Richtung (V) bewegbaren Träger (7, 8, 9), auf dem das Objekt aufgebaut werden soll,
einen über eine Arbeitsebene (10) bewegbaren Beschichter (14) zum Aufbringen einer Schicht (31) des Aufbaumaterials (13) auf die Arbeitsebene (10) und
eine Verfestigungsvorrichtung (20) zum selektiven Verfestigen der aufgebrachten Schicht (31) an Stellen, die einem Querschnitt des herzustellenden Objekts (2) entsprechen,
wobei die Vorrichtung (1) ausgebildet und/oder gesteuert ist:
die Schritte des Absenkens, des Aufbringens und des selektiven Verfestigens zu wiederholen, bis das Objekt (2) fertiggestellt ist,
**dadurch gekennzeichnet, dass** die Vorrichtung (1) weiter ausgebildet und/oder gesteuert ist, das Aufbringen des pulverförmigen Aufbaumaterials (13) so durchzuführen, dass innerhalb eines in der Arbeitsebene (10) liegenden bestimmungsgemäßen Beschichtungsbereichs (B) in einem Bereich, der von dem Beschichter (14) überfahren wird, in Bezug auf mindestens eine Pulverschicht abschnittsweise aktiv gesteuert die Menge des aufgebrachten pulverförmigen Aufbaumaterials (13) verringert oder gar kein pulverförmiges Aufbaumaterial (13) aufgetragen wird,
wobei eine Dosierung des pulverförmigen Aufbaumaterials (13) über einen Verschluss in dem Beschichter (14) und/oder einer Dosiervorrichtung (40) gesteuert wird.

12. Vorrichtung (1) gemäß Anspruch 11, weiter umfassend einen nach oben offenen Behälter (5),
wobei der Träger (7, 8, 9) in dem Behälter (5) angeordnet ist,
die obere Öffnung des Behälters (5) in der Arbeitsebene (10) liegt,
das Innere dieser Öffnung ein schrittweise absenkbares Baufeld (B1) bildet und
die Vorrichtung (1) ausgebildet und/oder gesteuert ist, das Aufbringen des pulverförmigen Aufbaumaterials (13) in Bezug auf mindestens eine Pulverschicht aktiv gesteuert so durchzuführen, dass in einem das Baufeld (B1) umgebenden Randbereich (B2) des bestimmungsgemäßen Beschichtungsbereichs (B) mindestens bereichsweise weniger pulverförmiges Aufbaumaterial als im Baufeld (B1) oder überhaupt kein Aufbaumaterial aufgebracht wird.

13. Steuereinheit (29) für eine Vorrichtung (1) gemäß Anspruch 11 oder 12, wobei die Steuereinheit (29) ausgebildet ist, die Vorrichtung so zu steuern, dass sie ein Verfahren nach einem der Ansprüche 1 bis 10 ausführt.

14. Computerprogramm, das in eine programmierbare Steuereinheit (29) gemäß Anspruch 13 ladbar ist, mit Programmcodemitteln, um alle Schritte eines Verfahrens gemäß einem der Ansprüche 1 bis 10 auszuführen, wenn das Computerprogramm auf der Steuereinheit (29) ausgeführt wird.

## Claims

1. A method for producing a three-dimensional object (2) on a support (7, 8, 9) by layer-wise applying and selectively solidifying a building material (13) in powder form comprising the steps of:
lowering the support (7, 8, 9) to a predetermined height below a working plane (10),
applying a layer (31) of the building material (13) in powder form in the working plane (10) by means of an application device (14) moving across the working plane (10),
selectively solidifying the applied powder layer (31) at positions corresponding to a cross-section of the object (2) to be produced and
repeating the steps of lowering, applying and selectively solidifying until the object (2) is completed,
**characterized in that** within an intended application area (B) located in the working plane (10), with respect to at least one powder layer, within an area across which the application device (14) moves, the quantity of applied building material in powder form (13) is reduced in a section in an actively controlled way or substantially no building material in powder form (13) is applied in a section in an actively controlled way,
wherein a metering of the building material (13) in powder form is controlled via a closure in the application device (14) and/or a metering device (40).

2. The method according to claim 1, wherein
the intended application area (B) comprises a build area (B1) and a boundary area (B2) surrounding the same,
the build area (B1) is the lowerable area within which the applied and selectively solidified powder layers (30) are lowered before applying a new powder layer (31) and
the application of the building material (13) in powder form with respect to at least one powder layer takes place in an actively controlled way such that in the boundary area (B2), in particular in front of and/or behind the build area (B1) in the application direction (R), at least in some regions less building material (13) in powder form is applied than in the build area (B1) or substantially no building material in powder form (13) at all is applied.

3. The method according to claim 2, wherein the application of the building material (13) in powder form is controlled in such a way that the building material in powder form is applied all over the entire build area (B1).

4. The method according to one of claims 1 to 3, wherein the actively controlled application of the building material (13) in powder form takes place with respect to a plurality, particularly preferably the total number of powder layers.

5. The method according to one of claims 1 to 4, wherein the building material (13) in powder form is metered in the direction of the application device (14) from a metering device (40) moving along with the application device (14) and is then applied by the application device (14).

6. The method according to one of claims 1 to 5, wherein the building material (13) in powder form is fluidized and/or preheated in the application device (14) and/or the metering device (40) before it is applied to the working plane (10).

7. The method according to one of claims 1 to 6, wherein the closure is opened and/or closed in a stepless manner and/or wherein the closure comprises a slider and/or a milled or slotted shaft.

8. The method according to one of claims 1 to 7, wherein a working plate (15) is arranged around the build area (B1) in the working plane (10), which working plate is preferably heated by a separate heating element, wherein in particular the temperature of the working plate (15) is controlled to be higher than a temperature within the build area (B1).

9. The method according to one of claims 1 to 7, wherein a working table (15a) is arranged around the build area (B1) which is at least partially located below the working plane (10) and which is preferably heated by a separate heating element, wherein in particular the temperature of the working table (15a) is controlled to be higher than a temperature within the build area (B1).

10. The method according to one of claims 1 to 9, wherein an overflow slit (16a) is arranged behind the build area (B1) in the application direction (R) through which surplus powder (17a) can fall into an overflow container (18a).

11. A device (1) for producing a three-dimensional object (2) by selectively solidifying a building material (13) layer by layer comprising:
a support (7, 8, 9) that can be moved in a vertical direction (V) and on which the object is to be produced,
an application device (14) that can be moved across a working plane (10) for applying a layer (31) of the building material (13) to the working plane (10) and
a solidification device (20) for selectively solidifying the applied layer (31) at positions that correspond to a cross-section of the object (2) to be produced,
wherein the device (1) is configured and/or controlled:
to repeat the steps of lowering, applying and selectively solidifying until the object (2) is completed, **characterized in that**
the device (1) is configured and/or controlled to carry out the application of the building material (13) in powder form in such a way that within an intended application area (B) located in the working plane (10), with respect to at least one powder layer, within an area across which the application device (14) moves, the quantity of applied building material in powder form (13) is reduced in a section in an actively controlled way or no building material in powder form (13) is applied in a section in an actively controlled way,
wherein a metering of the building material (13) in powder form is controlled via a closure in the application device (14) and/or a metering device (40).

12. The device (1) according to claim 11, further comprising a container (5) open to its top,
wherein the support (7, 8, 9) is arranged in the container (5),
the upper opening of the container (5) is located in the working plane (10),
the inside of said opening forms a build area (B1) that can be lowered step by step and
the device (1) is configured and/or controlled to carry out the application of the building material (13) in powder form with respect to at least one powder layer in an actively controlled way such that in a boundary area (B2) of the intended application area (B) surrounding the build area (B1), at least in some regions less building material in powder form is applied than in the build area (B1) or no building material in powder form at all is applied.

13. A control unit (29) for a device (1) according to claim 11 or 12, wherein the control unit (29) is configured to control the device such that it carries out a method according to one of claims 1 to 10.

14. A computer program which can be loaded into a programmable control unit (29) according to claim 13, comprising program code means for executing all steps of a method according to one of claims 1 to 10 when the computer program is executed on the control unit (29).

## Revendications

1. Procédé de fabrication d'un objet tridimensionnel (2) sur un support (7, 8, 9) par application couche par couche et solidification sélective d'un matériau de construction pulvérulent (13), comprenant les étapes consistant à :
abaisser le support (7, 8, 9) à une hauteur prédéterminée en dessous d'un plan de travail (10),
appliquer une couche (31) du matériau de construction pulvérulent (13) dans le plan de travail (10) au moyen d'un enducteur (14) se déplaçant sur le plan de travail (10),
solidifier sélectivement la couche de poudre appliquée (31) à des positions qui correspondent à une section transversale de l'objet (2) à fabriquer, et
répéter les étapes d'abaissement, d'application et de solidification sélective jusqu'à ce que l'objet (2) soit terminé,
**caractérisé en ce que**, à l'intérieur d'une zone de revêtement conforme à l'usage prévu (B) située dans le plan de travail (10), dans une zone qui est parcourue par l'enducteur (14), de manière activement commandée par sections par rapport à au moins une couche de poudre, la quantité du matériau de construction pulvérulent appliqué (13) est réduite ou, pour l'essentiel, il n'est appliqué de matériau de construction pulvérulent (13),
dans lequel un dosage du matériau de construction pulvérulent (13) est commandé par l'intermédiaire d'une fermeture dans l'enducteur (14) et/ou un dispositif de dosage (40).

2. Procédé selon la revendication 1, dans lequel
la zone de revêtement conforme à l'usage prévu (B) contient une zone de construction (B1) et une zone de bord (B2) entourant celle-ci,
la zone de construction (B1) est la zone abaissable à l'intérieur de laquelle les couches de poudre appliquées et solidifiées sélectivement (30) sont abaissées avant l'application d'une nouvelle couche de poudre (31), et
l'application du matériau de construction pulvérulent (13) s'effectue de manière activement commandée par rapport à au moins une couche de poudre de telle sorte que, dans la zone de bord (B2), en particulier dans la direction de revêtement (R) avant et/ou derrière la zone de construction (B1), moins de matériau de construction pulvérulent (13) est appliqué au moins par zones que dans la zone de construction (B1) ou sensiblement aucun matériau de construction pulvérulent (13) n'est appliqué.

3. Procédé selon la revendication 2, dans lequel l'application du matériau de construction pulvérulent (13) est commandée de telle sorte que le matériau de construction pulvérulent est appliqué sur toute la surface de la zone de construction (B1).

4. Procédé selon l'une quelconque des revendications 1 à 3, dans lequel l'application activement commandée du matériau de construction pulvérulent (13) s'effectue par rapport à une pluralité, de manière particulièrement préférée par rapport au nombre total des couches de poudre.

5. Procédé selon l'une quelconque des revendications 1 à 4, dans lequel le matériau de construction pulvérulent (13) est dosé depuis un dispositif de dosage (40) se déplaçant avec l'enducteur (14) en direction de l'enducteur (14) et ensuite est appliqué par celui-ci.

6. Procédé selon l'une quelconque des revendications 1 à 5, dans lequel le matériau de construction pulvérulent (13) est fluidisé et/ou préchauffé avant son application sur le plan de travail (10) dans l'enducteur (14) et/ou le dispositif de dosage (40).

7. Procédé selon l'une quelconque des revendications 1 à 6, dans lequel
la fermeture est ouverte et/ou fermée en continu et/ou la fermeture comprend un coulisseau et/ou un arbre fraisé ou fendu.

8. Procédé selon l'une quelconque des revendications 1 à 7, dans lequel une plaque de travail (15) est disposée autour de la zone de construction (B1) dans le plan de travail (10), la plaque de travail étant de préférence chauffée par un élément chauffant propre, dans lequel, en particulier, la température de la plaque de travail (15) est commandée de telle sorte qu'elle est supérieure à une température à l'intérieur de la zone de construction (B1).

9. Procédé selon l'une quelconque des revendications 1 à 7, dans lequel une table de travail (15a) est disposée autour de la zone de construction (B1), la table de travail étant abaissée au moins en partie sous le plan de travail (10) et de préférence chauffée par un élément chauffant propre, dans lequel en particulier la température de la table de travail (15a) est commandée de telle sorte qu'elle est supérieure à une température à l'intérieur de la zone de construction (B1).

10. Procédé selon l'une quelconque des revendications 1 à 9, dans lequel une fente de trop-plein (16a) est disposée dans la direction de revêtement (R) derrière la zone de construction (B1), à travers laquelle la poudre en excès (17a) peut tomber dans un récipient de trop-plein (18a).

11. Dispositif (1) de fabrication d'un objet tridimensionnel (2) par solidification sélective couche par couche de matériau de construction (13), comprenant :
un support (7, 8, 9) déplaçable dans une direction verticale (V), sur lequel l'objet doit être construit,
un enducteur (14) déplaçable sur un plan de travail (10) pour appliquer une couche (31) du matériau de construction (13) sur le plan de travail (10) et
un dispositif de solidification (20) pour solidifier sélectivement la couche appliquée (31) à des positions qui correspondent à une section transversale de l'objet (2) à fabriquer,
dans lequel le dispositif (1) est réalisé et/ou commandé :
pour répéter les étapes d'abaissement, d'application et de solidification sélective jusqu'à ce que l'objet (2) soit terminé,
**caractérisé en ce que** le dispositif (1) est en outre réalisé et/ou commandé pour effectuer l'application du matériau de construction pulvérulent (13) de telle sorte que, à l'intérieur d'une zone de revêtement conforme à l'usage prévu (B) située dans le plan de travail (10), dans une zone qui est parcourue par l'enducteur (14), la quantité du matériau de construction pulvérulent appliqué (13) est réduite ou aucun matériau de construction pulvérulent (13) n'est appliqué de manière activement commandée par sections par rapport à au moins une couche de poudre,
dans lequel un dosage du matériau de construction pulvérulent (13) est commandé par l'intermédiaire d'une fermeture dans l'enducteur (14) et/ou un dispositif de dosage (40).

12. Dispositif (1) selon la revendication 11, comprenant en outre un récipient (5) ouvert vers le haut,
dans lequel le support (7, 8, 9) est disposé dans le récipient (5),
l'ouverture supérieure du récipient (5) est située dans le plan de travail (10),
l'intérieur de cette ouverture forme une zone de construction abaissable pas à pas (B1), et
le dispositif (1) est réalisé et/ou commandé pour effectuer l'application du matériau de construction pulvérulent (13) de manière activement commandée par rapport à au moins une couche de poudre de telle sorte que, dans une zone de bord (B2) de la zone de revêtement conforme à l'usage prévu (B) entourant la zone de construction (B1), moins de matériau de construction pulvérulent est appliqué au moins par zones que dans la zone de construction (B1) ou aucun matériau de construction n'est appliqué.

13. Unité de commande (29) pour un dispositif (1) selon la revendication 11 ou 12, dans laquelle l'unité de commande (29) est réalisée pour commander le dispositif de telle sorte qu'il exécute un procédé selon l'une quelconque des revendications 1 à 10.

14. Programme informatique qui peut être chargé dans une unité de commande programmable (29) selon la revendication 13, comprenant des moyens de code de programme pour exécuter toutes les étapes d'un procédé selon l'une quelconque des revendications 1 à 10 lorsque le programme informatique est exécuté sur l'unité de commande (29).
